# EUROPÄISCHE PATENTANMELDUNG

(11) **EP 3 644 009 A1**
(43) Veröffentlichungstag der Anmeldung: **29.04.2020**
(21) Anmeldenummer: 18202283.0
(22) Anmeldetag: 24.10.2018
(51) Int. Cl.: G01B 7/16, G01L 1/04, G01L 1/14

(54) **DEHNUNGSMESSSTRUKTUR MIT EINEM STRUKTURIERTEN TRÄGER**

(71) Anmelder: Hahn-Schickard-Gesellschaft für angewandte Forschung e.V., 78052 Villingen-Schwenningen (DE)
(72) Erfinder: Bittner, Achim Dr., 74080 Heilbronn (DE); Folkmer, Bernd, 78462 Konstanz (DE); Bourouah, Mohamed, 78056 Villingen-Schwenningen (DE)
(74) Vertreter: Hertin und Partner Rechts- und Patentanwälte PartG mbB

(57) **Zusammenfassung**

Die Erfindung betrifft eine Dehnmessstruktur umfassend einen Träger, welcher erst nach einem Fügen auf das zu vermessene Objekt entlang der Sollbruchstellen in Bereiche aufgeteilt wird. Nach dem Auftrennen entlang der Sollbruchstellen sind die einzeln in den Fügezonen gefügten Bereiche bei einer Dehnung des Objekts frei zueinander bewegbar, ohne dass die Dehnmessstruktur nennenswerte Kräfte auf das zu vermessende Objekt ausübt, die die Dehnungsmessung verfälschen könnten. Dabei liegen zwischen den Bereichen Messanordnungen zur Dehnungsmessung vor, welche je nach Anwendung auf unterschiedlichen Prinzipien beruhen können. Die Erfindung betrifft weiterhin ein Herstellungsverfahren für die Dehnmessstruktur, ein Verfahren zur Dehnungsmessung von Objekten sowie die Verwendung der Struktur zur Dehnungsmessung. Auch ein System umfassend die Dehnmessstruktur und eine Steuereinrichtung zum Auslesen und bevorzugt Aktivieren und Fügen der Struktur sind bevorzugt Gegenstand der Erfindung.

## Beschreibung

Die Erfindung betrifft eine Dehnmessstruktur umfassend einen Träger, welcher erst nach einem Fügen auf das zu vermessene Objekt entlang der Sollbruchstellen in Bereiche aufgeteilt wird. Nach dem Auftrennen entlang der Sollbruchstellen sind die einzeln in den Fügezonen gefügten Bereiche bei einer Dehnung des Objekts frei zueinander bewegbar, ohne dass die Dehnmessstruktur nennenswerte Kräfte auf das zu vermessende Objekt ausübt, die die Dehnungsmessung verfälschen könnten. Dabei liegen zwischen den Bereichen Messanordnungen zur Dehnungsmessung vor, welche je nach Anwendung auf unterschiedlichen Prinzipien beruhen können. Die Erfindung betrifft weiterhin ein Herstellungsverfahren für die Dehnmessstruktur, ein Verfahren zur Dehnungsmessung von Objekten sowie die Verwendung der Struktur zur Dehnungsmessung. Auch ein System umfassend die Dehnmessstruktur und eine Steuereinrichtung zum Auslesen und bevorzugt Aktivieren und Fügen der Struktur sind bevorzugt Gegenstand der Erfindung.

### Hintergrund und Stand der Technik

Dehnungsmessungen an Objekten werden z. B. vorgenommen zur Dimensionierung und Überprüfung von mechanisch beanspruchten Bauteilen. Bei einer funktionsgerechten Dimensionierung von mechanisch beanspruchten Bauteilen ist es erforderlich, Kenntnis über die Art der Beanspruchungen zu haben. Die entscheidenden Größen für die Konstruktion sind die maximal auftretenden Spannungen, die letztendlich die Abmessungen festlegen. Diese Spannungen gilt es im Vorwege zu bestimmen und anschließend experimentell im Versuch nachzuprüfen. Experimentelle Spannungsanalyse kann somit als Bindeglied zwischen den theoretischen Berechnungen und den Nachweisen im Versuch betrachtet werden. Zu solch einer Spannungsanalyse werden Dehnmessstreifen (DMS) oder allgemein Dehnungssensoren verwendet.

Weiter ist die experimentelle Analyse von Dehnungen im Zuge von Maschinenzustandsüberwachungen erforderlich zur Erfassung und Dokumentation veränderlichen Beanspruchungen, bspw. aufgrund von zeitlichen Änderungen der Rand- und Betriebsbedingungen sowie der Werkstoffeigenschaften.

Bedingt durch die Bauteilgeometrie und dem Lastangriff ist der Beanspruchungszustand eine Funktion des Ortes. Über die Oberfläche variieren die Beträge der Hauptspannungen ebenso wie deren Hauptrichtungen. In der Nähe starker Variationen der Abmessung: Absätze, Kerben, etc. liegen meist die lokalen Beanspruchungsmaxima. In deren Nähe herrschen dabei starke Gradienten. Der Spannungszustand wird über eine Verformungs- oder Dehnungsmessung durchgeführt. Selbst bei hohen Bauteilbeanspruchungen (Stress kurz vor Bruchgrenze) liegen bei üblichen, meist metallischen Werkstoffen nur sehr kleine Verformungen bzw. Dehnungen vor (ca. 1-2°/oo). Rein mechanisch belastete Bauteile weisen die höchsten Beanspruchungen an der Bauteiloberfläche auf. Die Messung findet daher bevorzugt an der Oberfläche statt. Empfindliche Messstrukturen müssen daher zugeführt und lokal, möglichst innig mit dem Prüfling verbunden, aufgebracht werden.

Oftmals muss ein mehrachsiger Beanspruchungszustand vermessen werden. Sofern keine zusätzliche normale Last (z.B. Druck) anliegt, herrscht dabei an Oberflächen von zu vermessenen Objekten üblicherweise ein zweiachsiger Spannungszustand vor. In der Regel sind dessen Hauptrichtungen aber unbekannt. DMS-Rosetten, welche mehrere DMS in verschiedene Richtungen aufweisen, erfüllen innerhalb der experimentellen Spannungsanalyse die wichtige Aufgabe, einen 2-achsigen Spannungs-/ Dehnungszustand vollständig zu bestimmen, da nachgewiesen wurde, dass mit drei voneinander unabhängigen Dehnungsmessungen in verschiedenen Richtungen die Hauptdehnungen bestimmbar sind. Selbst wenn die Hauptrichtungen bekannt sind, werden immer noch zwei voneinander unabhängige Dehnungsmessungen zu deren Bestimmung benötigt. Bekannte Anordnungen aus dem Stand der Technik sind dabei die 45°-Rechtwinkel-Rosette und die 60°-Delta-Rosette.

Dehnungsmessstreifen basieren auf der Änderung des elektrischen Widerstands durch Längen- und Querschnittsänderung. Wird ein DMS gedehnt, so nimmt sein Widerstand zu. Wird er gestaucht (negative Dehnung), so nimmt sein Widerstand ab. Dabei gilt *dR*/*R* = *k*·*ε*, wobei *ε* der relativen Längenänderung entspricht.

Problemfelder metallischer DMS sind geringe k-Faktoren und resultierende geringe Empfindlichkeiten sowie große DMS und daher schlechte Ortsauflösung, insbesondere bei Rosetten, bei denen bedingt durch die Größe der DMS an die verschiedenen Achsen an verschiedenen Orten gemessen wird, woraus ein fehlerbehaftetes Ergebnis resultiert.

Wesentlich empfindlichere Messungen erlauben dahingegen Halbleiter-DMS. Jedoch ist ebenso die mechanische Empfindlichkeit dieser DMS sehr hoch, die Montage ist daher aufwendig und es kommt nichtsdestotrotz oft zu einem Bruch des DMS. Außerdem werden diese Halbleiter DMS oft ganzflächig und steif an das zu vermessene Objekt angeklebt, nicht selten auch um die Stabilität des DMS zu erhöhen. Dabei beeinflussen und verfälschen die mechanischen Eigenschaften des Klebers oftmals die Dehnungsmessung.

Auch generell ergeben sich bei den aus dem Stand der Technik bekannten DMS Messmethoden häufig Probleme, insbesondere bei den üblicherweise verwendeten Brückenschaltungen mit nur 1 oder 2 aktiven, relativ großen DMS an unterschiedlichen Orten auf dem Bauteil und Ergänzung der Brückenschaltung durch passive Widerständen, nämlich insbesondere eine schlechte Temperaturkompensation und geringe Empfindlichkeiten.

Es sind aus der WO 2010139034 A2 sogenannte *Sidewall MEMS* bekannt, MEMS Strukturen mit Dotierungen in den Seitenwänden, aus denen piezoresistive Bereiche resultieren. Diese können als Sensoren zur Vermessung von Spannungen des MEMS-Bauteils selber verwendet werden. Dabei ergeben sich Vorteile aus den Möglichkeiten, Halbleiter für die MEMS-Technologie zu strukturieren, z. B: eine hohe Designflexibilität, hohe Empfindlichkeiten möglicher Sensoren, keine Materialermüdung der MEMS-Strukturen, Kompatibilität mit CMOS-Technologie, Universalität der Herstellungstechnologie und Einfachheit der Strukturen aufgrund der integrierten Sensoren, dabei je nach Ausführungsform mit mehreren Messwiderständen gute, inhärente Temperaturkompensation durch große räumliche Nähe der Messwiderstände zueinander innerhalb des MEMS-Bauteils.

Eine Verwendung solcher Strukturen zur Vermessung von Dehnungen externer Objekte ist jedoch unbekannt. Dabei sind auch einige Herausforderungen gegeben, wie z. B. eine Messung der gesamten Steifigkeitsmatrix der Halbleiter (Silizium) Struktur und dessen hohe Steifigkeit im Allgemeinen und eine mögliche Temperaturdrift der Sensoren. Diese Herausforderungen konnten bislang im Stand der Technik nicht überwunden werden.

### Aufgabe der Erfindung

Aufgabe der Erfindung ist es, eine Dehnungsmessstruktur ohne die Nachteile des Standes der Technik bereitzustellen. Insbesondere war es eine Aufgabe der Erfindung, eine Dehnmessstruktur zur Verfügung zu stellen, welche eine hohe Empfindlichkeit und Kompaktheit aufweist, dabei jedoch robust ist, leicht zu lagern und anzubringen ist und eine geringe Fehleranfälligkeit aufweist.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

Dehnungsmessstruktur zur Dehnungsmessung an einem Objekt umfassend
- einen strukturierten Träger,
- mindestens eine Messanordnung zur einachsigen Dehnungsmessung,
wobei der Träger mindestens zwei Bereiche aufweist, welche durch eine Sollbruchstelle voneinander getrennt sind, wobei die Messanordnung zwischen zwei Bereichen vorliegt, jeder Bereich in einer Fügezone fügbar mit dem Objekt ist und wobei die Sollbruchstelle konfiguriert ist für eine Aktivierung der Dehnungsmessstruktur durch Auftrennen des Trägers in die Bereiche.

Durch den zusammenhängenden Träger, welcher erst nach einem Fügen auf das zu vermessene Objekt entlang der Sollbruchstellen in Bereiche aufgeteilt wird, ist die Dehnmessstruktur vor dem Fügen besonders robust und leicht zu handhaben. Nach dem Auftrennen entlang der Sollbruchstellen sind die einzeln in den jeweiligen Fügezonen gefügten Bereiche bei einer Dehnung des Objekts frei zueinander bewegbar, ohne dass die Dehnmessstruktur nennenswerte Kräfte auf das Objekt ausübt, die die Dehnungsmessung verfälschen könnten. Dabei können zwischen den Bereichen Messanordnungen zur Dehnungsmessung vorliegen, welche je nach Anwendung auf unterschiedlichen Prinzipien beruhen können. Sowohl ein Auftrennen des Trägers als auch ein Fügen kann ferngesteuert, z. B. über eine elektrische Steuerung sowie ein geeignetes Füge- und Auftrennprinzip, vorgenommen werden. So eignet sich die Vorrichtung insbesondere für sehr miniaturisierte oder schwer zugängliche Dehnmessstrukturen und automatisierte Messungen.

Die Dehnungsmessstruktur dient zur Dehnungsmessung an einem Objekt. Das Objekt kann dabei bevorzugt jeder Art mechanisch beanspruchtes Bauteil sein, dessen Beanspruchung, sich in Form einer Dehnung des Objekts bemerkbar macht und über eine Dehnungsmessung messbar ist. Eine Dehnung (oftmals mit dem Formelzeichen ε bezeichnet) gibt eine relative Längenänderung eines Objektkörpers an, welche eine Verlängerung oder Verkürzung sein kann. Dehnungen finden bevorzugt unter Krafteinwirkung und/oder Temperaturänderung statt. Man bezeichnet eine Vergrößerung des Objekts als positive Dehnung bzw. Streckung, andernfalls wird von einer negativen Dehnung bzw. Stauchung gesprochen. Eine Dehnung ist bevorzugt definiert als *ε* = *ΔI*/*I₀,* wobei *ΔI* die Längenänderung darstellt und *I₀* die Ausgangslänge. Bei einer resistiven Dehnungsmessung, bei der eine Dehnung eine Widerstandsänderung *ΔR* hervorruft, ist der *k-Faktor* die Proportionalitätskonstante zwischen der Dehnung und der relativen Widerstandsänderung und ist somit ein Maß für die Empfindlichkeit der Dehnungsmessung: *ΔR*/*R* = *k·ε*.

Eine Dehnungsmessung kann grundsätzlich an jeder Stelle und entlang jeglicher Richtung(en) eines Objekts vorgenommen werden. Bevorzugt wird eine Dehnungsmessung jedoch mindestens entlang einer (bevorzugt geraden) Richtung bzw. Achse innerhalb einer Fläche vorgenommen, welche im Inneren und/oder Äußeren eines Objekts liegen kann. Eine solche Fläche kann z. B. eine Oberfläche des Objekts sein, es kann sich jedoch auch eine Trennfläche zwischen mehreren Bestandteilen eines zusammengesetzten Objekts handeln, bspw. bei einet Einbettung in einem Laminat entlang einer Innenfläche.

Ein strukturierter Träger ist ein bevorzugt robustes und geeignet geformtes Element, welches seinem Namen entsprechend die Messanordnung der Dehnmessstruktur trägt, dieser bevorzugt eine stabile und kompakte Plattform bietet und eine Verbindung zwischen Messanordnung und zu vermessenen Objekt bilden kann. Der Träger kann viele Formen annehmen, bspw. stäbchenförmig sein oder die Form einer rahmenartigen Struktur aufweisen.

Eine Messanordnung zur einachsigen Dehnungsmessung enthält bevorzugt alle für die Messung der Dehnung des Objekts grundsätzlich wesentlichen Elemente. Dehnungsmessungen können auf verschiedene Weisen realisiert werden, bspw. durch die Widerstandsänderungen des verwendeten Sensormaterials im Falle der bekannten DMS. Aber auch Dehnungsmessungen durch Messungen einer Kapazitätsänderung bei einer von der Dehnung verursachten Entfernungsänderung von Elektroden sind denkbar. Ebenso sind bspw. optische Entfernungsmessungen als Grundprinzip der Dehnungsmessung möglich. Die Messanordnung umfasst dabei die für das grundsätzliche Messprinzip wesentlichen Elemente, wie (piezo-) resistive Elemente für die klassische Dehnungsmessung, Elektroden für eine kapazitive Messung oder geeignete optische Elemente für eine optische Dehnungsmessung etc. Der strukturierte Träger ist dabei jedoch als Plattform der Messanordnung, zur Verleihung von Stabilität und Verankerung mit dem zu vermessenen Objekt bevorzugt unentbehrlich. Eine einachsige Messanordnung bezieht sich bevorzugt auf die wesentliche Richtung der Dehnungsmessung. Diese wird vorzugsweise durch eine Gerade dargestellt, welche die Vorzugsmessrichtung bzw. der Achse der Messanordnung angibt. Diese ist wiederum insbesondere durch den Aufbau der Messanordung und das zugrundeliegende Messprinzip gegeben. Eine Messanordnung basierend auf einer Widerstandsänderung ist typischerweise z. B. dafür konfiguriert, Dehnungen im Wesentlichen entlang seiner Längsrichtung zu messen. Auch eine kapazitive Dehnungsmessung misst im Wesentlichen beispielsweise Dehnungen entlang der Normalen zu den Elektroden. Allerdings kann bevorzugt auch teilweise entlang anderer Richtungen, welche einen Anteil quer zur Vorzugsrichtung haben, gemessen werden. Die Messanordnung hat bevorzugt im Wesentlichen zwei Endpunkte oder Seiten, zwischen denen bevorzugt die einachsige Messung stattfindet und deren Verbindungsstrecke die Vorzugsmessrichtung darstellt. Diese ist bevorzugt im Wesentlichen eine Verbindungsstrecke entlang der Messanordnung zwischen den zwei Bereichen, zwischen denen die Messanordnung vorliegt.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Der Träger weist mindestens zwei Bereiche auf, welche durch eine Sollbruchstelle voneinander getrennt sind. Eine Sollbruchstelle ist eine Stelle, an der die Struktur des Trägers bevorzugt absichtlich geschwächt wird, so dass eine Trennung oder ein bewusst herbeigeführtes Zerbrechen des Trägers entlang dieser Sollbruchstelle durchgeführt werden kann. Die Sollbruchstelle soll dabei so konfiguriert sein, dass die Bereiche des Trägers im Ursprungszustand miteinander kraft- und oder formschlüssig in Verbindung stehen, so dass die Bereiche des Trägers eine Einheit bilden. Allerdings ist die Sollbruchstelle so angelegt, dass der Träger durch Einwirkung von zugeführter Energie entlang dieser in die Bereiche geteilt werden kann, bevorzugt ohne die restliche Dehnmessstruktur und deren Funktionalität dabei negativ in Mitleidenschaft zu ziehen.

Jeder Bereich ist in einer Fügezone fügbar mit dem zu vermessenen Objekt. Fügen bedeutet dabei insbesondere miteinander kraft- und/oder formschlüssig zu verbinden, beispielsweise durch Schweißen, Kleben, Löten, Nieten, Durchsetzfügen und/oder Schrauben. Auch eine Saugverbindung basierend auf Unterdruck zwischen dem Objekt und der Fügezone ist denkbar. Die Fügezone ist dabei eine Zone des Bereichs, welcher für ein Fügen mit dem zu vermessenen Objekt vorgesehen ist. Eine Fügezone kann beispielsweise auf einer glatten Fläche des Bereichs auf einer Unterseite der Messanordnung vorliegen, welche bevorzugt die Verbindungsfläche mit dem zu vermessenden Objekt und der Dehnmessstruktur bildet. Die Fügezone ist dabei bevorzugt möglichst klein, so dass die Dehnmessstruktur nicht großflächig, sondern vielmehr punktuell mit dem zu vermessenen Objekt in Verbindung steht. Die Fügezone ist jedoch bevorzugt ausreichend groß, um eine kraft- und oder formschlüssige Verbindung der Dehnmessstruktur auch unter den größtmöglichen, typischerweise zu erwartenden Dehnungen des Objekts sicherzustellen. Jeder Bereich weist dabei bevorzugt genau eine Fügezone auf. Es kann jedoch auch bevorzugt sein, mindestens einen Bereich über mehr als eine Fügezone mit dem Objekt zu fügen. Die Fügezone kann dabei bevorzugt geeignet zum Fügen mit dem Objekt sein, bspw. über eine speziell behandelte Oberfläche, welche z. B. aufgeraut ist. Ebenso kann die Fügezone bereits Verbindungselemente wie etwa einen (bevorzugt aktivierbaren) Kleber aufweisen.

Die Messanordnung liegt dabei zwischen zwei Bereichen vor, die über die Sollbruchstelle voneinander trennbar sind. Das bedeutet insbesondere, dass die Messanordnung bevorzugt geeignet ist, eine Entfernungsänderung der Bereiche aufgrund einer Dehnung entlang der einachsigen Dehnungsmessung zu realisieren. Dabei sind die für das jeweilige Messprinzip bevorzugten Elemente insbesondere so zwischen diesen beiden Bereichen aufgeteilt, dass diese Messung ermöglicht wird. Beispielsweise kann die Messanordnung zur resistiven Dehnungsmessung zwischen den Bereichen aufgespannt sein und auf den Querseiten mit jeweils einem Bereich in Verbindung stehen. Querseite bezeichnet dabei bevorzugt eine Seite der Messanordnung quer zur Vorzugsmessrichtung bzw. Achse. Eine Messanordnung zur kapazitiven Dehnungsmessung kann bevorzugt jeweils mindestens eine in einem Bereich vorliegende und mit diesem in Verbindung stehende Elektrode aufweisen.

Die Sollbruchstelle ist konfiguriert für eine Aktivierung der Dehnungsmessstruktur durch Auftrennen des Trägers in die Bereiche. Das bedeutet insbesondere, dass durch Einbringen einer externen Kraft und/oder Energie der Träger entlang der Sollbruchstelle in Bereiche aufgeteilt werden kann. Aktivierung bedeutet dabei weiterhin, dass die Dehnmessstruktur in einen Zustand versetzt wird, welcher sich besonders gut zu einer Dehnungsmessung des zu vermessenen Objekts eignet. Dies ist insbesondere dann der Fall, wenn der Träger nicht mehr eine Einheit darstellt, sondern in die Bereiche aufgeteilt ist, zwischen denen bevorzugt mindestens eine Messanordnung vorliegt. Dabei sind die Bereiche bevorzug nur noch die Plattformen der zwei Seiten bzw. Endpunkte der Messanordnung, zwischen denen eine Entfernungsmessung vorgenommen wird. Die Bereiche stehen nach der Aktivierung bevorzugt nicht mehr miteinander in direkter Verbindung und sind zueinander durch Dehnung des Objekts im Wesentlichen ohne Widerstand bewegbar. so dass bevorzugt eine Dehnung des Objekts zwischen den Fügezonen des Bereiches gemessen werden kann. Das Objekt steht dabei insbesondere mit der Dehnungsmessstruktur nur punktuell direkt in Verbindung, so dass die Dehnung des Objekts nicht durch die Struktur beeinflusst wird, beispielsweise über großflächige Klebeflächen. Dabei sind vorteilhafterweise die Messanordnungen genau zwischen diesen punktuellen Fügezonen angeordnet. So kann eine überraschend präzise Dehnungsmessung vorgenommen werden. Es existiert im Wesentlichen keine Rückwirkung der Dehnmessstruktur auf den Prüfling. Ebenso bestehen nur geringen Anforderungen an den Kleber bezüglich seiner Steifigkeit bzw. Elastizität, so dass die Fügetechnik stark vereinfacht werden kann.

Das Auftrennen des Trägers in Bereiche kann dabei bevorzugt ohne manuelle Handgriffe vorgenommen werden, beispielsweise durch Erhitzen und Aufschmelzen der Sollbruchstelle durch einen elektrischen Heizdraht. Dies trägt zu einer kompletten Automatisierung eines Dehnmessprozesses bei, welche insbesondere bei Dehnungsmessungen an unzugänglichen Stellen eines Objekts und/oder einer besonders miniaturisierten Dehnmessstruktur sehr vorteilhaft ist.

Die Aktivierung nach dem Fügen mit dem Objekt bietet dabei den Vorteil, dass die Dehnmessstruktur durch den zusammenhängenden Träger vor der Aktivierung besonders robust ist und leicht gehandhabt werden kann. Auch eine Fügung ist ohne eine aufwendige Positionierung der einzelnen Bereiche sehr einfach möglich, wobei sich die Messanordnung(en) ohne Zutun im Wesentlichen in ihrer Neutralstellung befinden, in der sie auf den zusammenhängenden Träger vorinstalliert werden.

Einmal auf dem Objekt gefügt und aktiviert, ist die Messanordnung zwischen den Bereichen im Wesentlichen freistehend und nur über die Fügezone jedes Bereichs mit dem Objekt verbunden. Die Messanordnung übt daher selber im Wesentlichen keine Kräfte auf das zu vermessende Objekt aus. Durch das Fehlen von einer Dehnung des Objekts entgegenstehenden Kräften durch den Träger, großflächiger Klebezonen sowie die Messanordnung selber kann die Präzision der Dehnungsmessung synergistisch gesteigert werden.

Die Größe der Dehnmessstruktur kann dabei bevorzugt sehr unterschiedlich sein und zwischen mehreren Zentimetern (cm) und (Sub-) Mikrometern (µm) betragen.

In einer bevorzugten Ausführungsform der Erfindung ist die Messanordnung konfiguriert für eine resistive, bevorzugt eine piezoresistive, eine piezoelektrische, eine optische, eine magnetische, eine induktive und/oder eine kapazitive Dehnungsmessung. Eine Messanordnung kann dabei ein einziges Element umfassen, welches eine resistive, bevorzugt eine piezoresistive, eine piezoelektrische, eine optische, eine magnetische, eine induktive und/oder eine kapazitive Dehnungsmessung erlaubt, ebenso kann es bevorzugt sein, dass eine Messanordnung mehrere solcher Elemente umfasst.

Resistive und piezoresistive Messanordnungen basieren auf einer Änderung des elektrischen Widerstands aufgrund einer Längenänderung der Messanordnung, welche bei der resistiven Messanordnung auf der Änderung von geometrischen Eigenschaften beruht und beim piezoresistiven Effekt im Wesentlichen durch das Material verursacht wird. Die piezoresistive Änderung des Widerstands aufgrund einer Dehnung der Messanordnung ist dabei insbesondere bei (dotierten) Halbleiter deutlich stärker (k-Faktor) und erlaubt bevorzugt empfindlichere und genauere Dehnungsmessungen. Eine Widerstandänderung kann dabei bevorzugt durch Änderung an der Messanordnung anliegenden Spannung in einer Wheatstoneschen Brücke gemessen werden. Diese Messeinrichtungen sind dem Fachmann bekannt. Ein Fachmann weiß ebenso, welche Materialien er bevorzugt verwenden muss, um eine (piezo-) resistive Messanordnung zu erhalten und beachtet bei der Herstellung einer solchen Messanordnung auch Faktoren wie etwaige anisotrope (piezo-) resistive und/oder Elastizitätseigenschaften des Materials, wie sie insbesondere bei Halbleitermaterialien bevorzugt vorkommen.

Eine piezoelektrische Messanordnung beruht bevorzugt auf einer materialinhärenten Generierung einer elektrischen Spannung durch auf die Anordnung wirkende Druck- und/oder Zugkräfte. Ein Fachmann weiß, welche Materialien und oder Materialmischungen und welche Strukturierungen des Materials bevorzugt geeignet sind für eine piezoelektrische Messanordnung.

Sowohl eine (piezo-) resistive als auch piezoelektrische Messanordnung ist dabei bevorzugt zwischen zwei Bereichen aufgespannt und so strukturiert, dass bei einer messbaren Dehnung und/oder Entfernungsänderung zwischen den Bereichen im Wesentlichen keine Kraft von der Messanordung auf die Bereiche ausgeübt wird. Dafür ist die Messanordnung bevorzugt entlang der Achse leicht dehnbar und/oder elastisch.

Eine induktive Messanordnung beruht bevorzugt auf der Stärke des durch ein veränderliches Magnetfeld hervorgerufenen Stroms. Dabei kann z. B. die Messanordnung zwischen zwei Bereichen auf einer Seite bzw. einem Endpunkt bei einem Bereich einen Schwingkreis mit einer Spule umfassen, welcher ein sich ständig im zeitlichen Verlauf änderndes Magnetfeld erzeugt, während an der anderen Seite bzw. dem anderen Ende beim zweiten Bereich ein elektrischer Leiter umfasst ist, in dem abhängig vom Abstand der Spule ein Strom durch das sich ändernde Magnetfeld induziert wird. Durch die Abstandsabhängigkeit kann eine (sich ändernde) Entfernung zwischen den zwei Bereichen bestimmt werden, welche in eine Messung der Dehnung des Objekt zwischen den beiden Bereichen überführt werden kann. Auch eine induktive Messanordnung basierend auf der Änderung der Induktivität einer Spule kann bevorzugt sein, z. B. ein Differentialtransformator, mit einem beweglichen Kern, welcher den Kopplungsfaktor zu zwei Sekundärspulen beeinflusst, ein Querankergeber oder ein Kurzschlussringgeber bei denen der wirksame Luftspalt eines Magnetkreises verändert wird und/oder ein Magneto-induktive Abstandssensor und/oder ein Wirbelstromsensor.

Dabei ist ein besonderer Vorteil, dass die die zwei Enden bzw. Seiten der Messanordnung getrennt sein können, da die Induktion auf dem elektrischen Feld beruht und kein physisches Übertragungsmedium benötigt. Daher werden im Wesentlichen keine Kräfte durch die Messanordnung auf die beiden Bereichen ausgeübt und die Dehnungsmessung ist besonders empfindlich, präzise und fehlerfrei.

Eine optische Messanordnung, welche zwischen zwei Bereichen vorliegt, misst vorzugsweise Dehnungen zwischen den Bereichen über eine Entfernungsmessung, die auch Änderungen der Entfernung, also Dehnungen, messen kann. Eine solche Messung beruht beispielsweise auf einer interferometrischen Messung, bei der über eine Überlagerung zueinander kohärenter optischer Signale Informationen über deren Phasenunterschied enthält, welche ausgelesen werden kann. Dieser Phasenunterschied enthält dabei wiederum bevorzugt Informationen über die Entfernung zwischen den Bereichen. Ein Fachmann weiß auch hier, wie er durch Einsatz geeigneter optischer Komponenten, wie z. B. Lichtquelle (Laser), Strahlteiler und Lichtdetektoren (Photodioden) eine solche optische Messanordnung implementieren kann. Durch eine solche optische Messanordnung basierend auf Interferometrie können ultragenaue Dehnungsmessungen durchgeführt werden. Aber auch eine optische Messanordnung basierend auf der Analyse einer Laufzeitmessung eines optischen Signals ist vorstellbar. Ein Vorteil der optischen Messanordnung ist, dass kein physisches Übertragungsmedium benötigt wird und daher im Wesentlichen keine Kräfte durch die Messanordnung auf die beiden Bereiche ausgeübt wird. Somit ist die Dehnungsmessung besonders empfindlich, präzise und fehlerfrei.

Eine magnetische Messanordnung kann bevorzugt auf einem Hall-Sensor beruhen, welcher je nach Position innerhalb eines Magnetfelds und damit je nach erfahrener magnetischer Flussdichte eine unterschiedliche Spannung generiert. Somit kann bevorzugt bei einem feststehenden Referenzmagnetfeld die gemessen Spannung zur relativen Lagebestimmung des Halls-Sensors zu diesem Magnetfeld genutzt werden. Durch dieses Messprinzip kann insbesondere eine Abstandsmessung zwischen den Bereichen realisiert werden, welche zur Dehnungsmessung genutzt werden kann. Ein Fachmann weiß, wie er dieses Prinzip als Messanordnung zur einachsigen Dehnungsmessung implementieren müsste. Auch sogenannte magnetoelastische Sensoren können zur Realisierung der Messanordnung bevorzugt sein. Diese beruhen auf dem Prinzip einer Permeabilitätsänderung bei einer Längenänderung eines geeigneten Materials.

Bevorzugt ist ebenfalls eine kapazitive Messanordnung. Diese beruhen auf dem Prinzip einer messbaren Änderung der Kapazität eines Kondensators bei einer Variation des Abstands zwischen den Kondensatorplatten (Elektroden). Ein besonderer Vorteil dieser Messmethode neben dem Fehlen eines physischen Übertragungsmediums und der im Wesentlichen Kräftefreiheit zwischen den Seiten/Enden der Messanordnung in den jeweiligen Bereichen ist die vielseitige Anwendbarkeit dieses Messprinzips. So sind eine Vielzahl verschiedener Implementierungen denkbar, beispielsweise in Form jeweils einer Kondensatorplatte pro Bereich auf jeder Seite der Messanordnung, aber auch (MEMS-) Kammstrukturen wie z. B. in der DE 10 2017 206 183 A1 sind denkbar. Dabei kann je nach Ausführungsform die Kammüberdeckung und/oder der Kammabstand variiert werden.

In einer weiteren bevorzugten Ausführungsform der Erfindung umfasst die Messanordnung eine Federstruktur, welche konfiguriert ist für eine resistive, bevorzugt eine piezoresistive, piezoelektrische und/oder eine kapazitive Dehnungsmessung. Eine Federstruktur ist bevorzugt eine elastische Struktur in Form einer technischen Feder. Dabei können z. B. Strukturen in Form einer Biegefeder und/oder Torsionsfeder eingesetzt werden. Beispiele für Biegefedern sind Blattfedern, für Torsionsfedern Schraubenfedern. Diese Federstruktur liegt bevorzugt zwischen zwei Bereichen vor und verbindet diese. Dabei kann die Federstruktur bevorzugt so beweglich gelagert werden, dass eine Dehnungsmessung am Objekt bevorzugt im Wesentlichen nicht durch von der Federstruktur über den gefügten Bereich auf das Objekt übertragene Kräfte eingeschränkt wird. Bevorzugt ist die Federstruktur dabei innerhalb der Dehnmessstruktur nach dem Fügen mit dem Objekt und der Aktivierung die einzige Verbindung zwischen diesen Bereichen. Gemeinsam ist allen bevorzugten Ausführungsformen der Federstruktur, dass diese elastisch durch Dehnung, Biegung, Scherung und/oder Torsion verformbar sind. Dabei ist besonders bevorzugt, dass diese zum einen innerhalb des Messbereichs der Messanordnung ausreichend Spannung aufweisen, dass eine Dehnung zu einer messbaren Formänderung der Federstruktur führen, welche bevorzugt im Wesentlichen proportional zur Dehnung ist, zum anderen elastisch und weich genug sind, dass bei einer Dehnung und/oder Stauchung der Federstruktur nur geringe Rückstellkräfte auf die Bereiche wirken, welche einer Dehnung des Objekts entgegenwirken und dabei die Messung verfälschen könnten. Die Messanordnung mit Federstruktur ist bevorzugt konfiguriert für eine resistive, bevorzugt eine piezoresistive, piezoelektrische und/oder eine kapazitive Dehnungsmessung. Das bedeutet insbesondere, dass eine aus einer Dehnung resultierende Formänderung der elastischen Struktur durch eine resistive, bevorzugt eine piezoresistive, piezoelektrische und/oder eine kapazitive Dehnungsmessung messbar ist. In einer Ausführungsform ist die Federstruktur bspw. schraubenfederartig. Dabei könnte die Feder selber aus einem Material bestehen, welches die Stauchung und/oder Streckung der Feder (piezo-) resistiv und/oder piezoelektrisch messbar macht. Es könnten sich jedoch ebenso in den äußeren Wandungen des bevorzugt drahtähnlichen Elements, welche die schraubenfederartige Struktur bildet, Bereiche befinden, welche eine Dehnungsmessung (piezo-) resistiv und/oder piezoelektrisch ermöglicht. Auch eine kapazitive Messanordnung ist so denkbar, in dem etwa die äußeren Wandungen Elektroden umfassen, die eine Verjüngung oder Verdickung des drahtähnlichen Elements bei einer Stauchung oder Streckung der Federstruktur vermessen. Auch eine Unterteilung der Schraubenfederartigen Struktur in Segmente, welche Elektroden umfassen und dazwischenliegende Segmente, welche bevorzugt ein Dielektrikum umfassen, ist bevorzugt vorstellbar.

Ein Fachmann weiß, dass eine Entfernungsänderung zwischen den Bereichen, zwischen denen eine Federstruktur vorliegt, bevorzugt nicht in einer proportionalen Längenänderung der Federstruktur resultiert, wie bei einer linearen, eindimensionalen Struktur zwischen den Bereichen, sondern zu einer Formänderung der Federstruktur aufgrund einer Dehnung, Biegung, Scherung und/oder Torsion der Federstruktur. Daher weiß der Fachmann, dass bei einer Auswertung der Dehnungsmessung, welche z. B. eine Dehnungsmessung der Federstruktur selber aufgrund oben genannter Prinzipien umfasst, diese Formänderung berücksichtigt werden muss, wenn auf die Dehnung des Objekts selber geschlossen werden soll. Daher wird bevorzugt eine geeignete Umrechnung vorgenommen. Es kann jedoch bevorzugt sein, dass dieser Effekt in einem Messbereich der Dehnungsmessung vernachlässigt werden kann, so dass eine so vorgenommene Messung der Dehnung der Feder im Wesentlichen proportional zur Dehnung des Objekts selber entlang der gemessenen Achse ist. Es kann ebenso bevorzugt sein, dass die resistive, bevorzugt piezoresistive, piezoelektrische und/oder kapazitive Dehnungsmessung durch die Federstruktur die Formänderung der Federstruktur aufgrund von Dehnung, Biegung, Scherung und/oder Torsion der Federstruktur selber erfassen kann, z. B. durch geeignete Anordnung der (piezo-) resistiven, piezoelektrischen und/oder kapazitiven Elemente und/oder einer geeigneten Auswertung, welche insbesondere auf theoretischen Überlegungen und/oder vorangegangenen Messungen/Eichungen basiert.

Eine solche Messanordnung ist aufgrund der im Wesentlichen (bis auf die Befestigung an den gefügten Bereichen) freistehenden, weichen Strukturen superelastisch und daher ebenfalls hochempfindlich für kleinste Dehnungen des zu vermessenden Objekts.

In einer weiteren bevorzugten Ausführungsform der Erfindung umfasst die Messanordnung einen Spalt, welcher konfiguriert ist für eine kapazitive und/oder eine optische Dehnungsmessung. Dieser Spalt liegt insbesondere zwischen den Bereichen vor, zwischen denen die Messanordnung vorliegt. Ein Spalt ist insbesondere für eine kapazitive Messanordnung konfiguriert, wenn er gemeinsam mit Elektroden einen Kondensator bildet, dessen Kapazität abhängig vom Abstand der Bereiche messbar variiert wird. Ein Fachmann weiß dabei, wie er die Kapazität selber vermisst. Z. B. durch Laden mit konstantem Strom und Messung der Spannungsanstiegsgeschwindigkeiten, Messung einer Resonanzfrequenz eines LC-Schwingkreises und/oder Anlegen einer Wechselspannung an den Kondensator und Messung des Stromverlaufs. In einer bevorzugten Form wird der Spalt dabei selber durch Elektroden (Kondensatorplatten) gebildet und bestimmt direkt die Kapazität des resultierenden Kondensators. Die Elektroden können dabei bevorzugt direkt auf den jeweiligen Bereichen des Trägers aufgebracht vorliegen. Es kann auch bevorzugt sein, dass zwischen den Bereichen eine aufgetrennte Federstruktur vorliegt, wobei die aufgetrennte Feder beschichteten Enden aufweist, zwischen denen ein Spalt vorliegt. welche die kapazitive Messanordnung im Wesentlichen bilden. Eine solche Messanordnung kann besonders einfach realisiert werden, aufgrund der im Wesentlichen Kräftefreiheit zwischen den zwei Enden/Seiten der Messanordnung in den jeweiligen Bereichen ist die Dehnungsmessung besonders genau und fehlerfrei.

In einer weiteren bevorzugten Ausführungsform der Erfindung ist die Federstruktur eine MEMS-Federstruktur, bevorzugt eine Halbleiter MEMS-Federstruktur, welche mindestens einen dotierten Bereich in einer Seitenwand aufweist, der einen Halbleiter-Dehnmessstreifen umfasst. Durch Dotierungen in der Seitenwand einer MEMS-Federstruktur können piezoresistive Eigenschaften hervorgerufen und/oder verstärkt werden, die sich zu einer lokalen Dehnungsmessung eignen. Halbleiter MEMS Strukturen mit dotierten Bereichen in der Seitenwand, aus denen piezoresistive Bereiche resultieren, sind z. B. aus WO 2010139034 A2 bekannt. Diese werden im Stand der Technik als Sensoren zur Vermessung von Spannungen des MEMS-Bauteils in dem sie vorliegen selber verwendet. Dabei ergeben sich Vorteile aus den Möglichkeiten, Halbleiter für die MEMS-Technologie zu strukturieren, z. B: eine hohe Designflexibilität, hohe Empfindlichkeiten der Sensoren, keine Materialermüdung der MEMS-Strukturen, Kompatibilität mit CMOS-Technologie, Universalität der Herstellungstechnologie und Einfachheit der Strukturen aufgrund der integrierten Sensoren. In dieser bevorzugten Ausführungsform sollen diese Bereiche nun in elastische Strukturen, insbesondere Federstrukturen, integriert werden, damit diese als Messanordnung zur Dehnungsmessung eines externen Objekts verwendet werden können. Da bevorzugte Halbleitermaterialien und insbesondere Silizium zwar sehr gut hergestellt werden können und gute piezoresistive Eigenschaften für hochempfindliche Messungen aufweisen, aber häufig eine hohe Eigensteifigkeit aufweisen, ist es insbesondere bevorzugt, dass die Halbleiter-MEMS Strukturen durch spezielle Strukturierung, insbesondere durch eine Federstruktur, elastisch genug sind, so dass die Messanordnung selber im Wesentlichen keine Kräfte auf das Objekt ausübt, dessen Dehnung vermessen werden soll. MEMS Strukturen sind dabei insbesondere Strukturen von Mikrosystemen (engl. *microelectromechanical system,* kurz MEMS), die sehr kompakt sind mit Abmessungen im (sub-) Mikrometerbereich bei gleichzeitig hervorragender Funktionalität und geringen Herstellungskosten dank standardisierter Herstellungstechniken.

Bevorzugt ist, dass durch die dotierten Bereiche Halbleiter-Dehnmessstreifen in den Seitenwänden der Federstruktur realisiert werden, die somit über eine Dehnungs- und/oder Formänderungsmessung die einachsige Dehnungsmessung der Messanordnung realisieren. Die Seitenwände der Federstruktur sind dabei insbesondere Teile der äußeren Hülle einer im Wesentlichen draht- und/oder streifenförmigen Struktur, welche durch geeignete Anordnung eine z. B. schraubenförmige Federstruktur bildet. Dabei können mehrere dotierte Bereiche entlang der Längsrichtung der Feder streifenförmig parallel zueinander bzw. einander gegenüberliegend vorliegen. Diese können in Bereichen oder entlang der kompletten Länge der Federstruktur vorliegen. Dabei ist bevorzugt, dass immer zwei räumlich nah beieinander liegende Bereiche in einer Halbbrücke und insbesondere vier räumlich nah beieinander liegende Bereiche in einer Vollbrücke installiert vorliegen. Die Wheatstonesche Brücke ist dem Fachmann als Messeinrichtung für Dehnmessstreifen bekannt. Liegen vier zu einander zueinander räumlich nah liegende Halbleiter-Dehnmessstreifen der Federstruktur in einer Vollbrücke vor, können insbesondere Temperaturdrift als Fehlerquelle der Dehnungsmessung kompensiert werden, da sich diese bevorzugt auf alle Halbleiter-Dehnmessstreifen gleich auswirken. Insbesondere durch die kompakte MEMS-Bauweise erfahren die Halbleiter-Dehnmessstreifen gleiche physikalische Beeinflussungen durch Temperaturänderungen etc. Diese können in einer Vollbrücke somit kompensiert werden.

Bei einer (Halbleiter) MEMS-Federstruktur können dabei bspw. auf zwei bis vier gegenüberliegenden Seiten der Seitenwände einer Federstruktur, welche bspw. die Form eines gewundenen Drahtes hat (welcher bevorzugt einen im Wesentlichen runden oder rechteckigen Querschnitt aufweist) eingelassene Halbleiter Dehnmessstreifen vorliegen, welche bevorzugt durch geeignet dotierte Bereiche des Halbleiters implementiert werden. Wird nun aufgrund einer Dehnung des zu vermessenen Objekts die Distanz zwischen zwei Bereichen der Dehnungsmessstruktur verändert, wird die MEMS-Federstruktur gedehnt, wobei sich diese Dehnung auch auf die Halbleiter-Dehnmesssteifen in dessen Seitenwänden überträgt und somit durch diese gemessen werden kann. Es kann dabei bspw. durch geeignete Hochskalierung auf die gesamte Dehnung des Objekts in die von der Messanordnung gemessenen Achse bzw. Richtung geschlossen werden. Ebenso können bevorzugt in den jeweiligen Seiten der Seitenwände der MEMS-Federstruktur mehrere Stellen mit einander gegenüberliegenden Halbleiter-Dehnmessstreifen vorliegen. Auch können bevorzugt auf der Federstruktur durchgängige Halbleiter-Dehnmessstreifen entlang der Längsrichtung vorliegen.

Eine solche Dehnmessstruktur ist hochempfindlich durch die empfindliche mechanische Messstruktur, insbesondere bei Vorliegen der Halbleitersensoren in Vollbrücke supergenau durch Messwiederstände auf gleicher Temperatur und/oder unter gleicher Beanspruchung, in gleicher Größe und mit gleicher Technologie.

Der sehr kleiner Formfaktor der MEMS Strukturen erlaubt insbesondere die Integration von mehreren DMS für lokale mehrachsige Messungen, womit vorteilhafterweise der vollständige Stresstensor bestimmt werden kann.

Solche Strukturen weisen eine überraschende Temperaturkompensation und Linearität bei der Dehnungsmessung mit gleichzeitig vernachlässigbarer Steifigkeit auf, da im Stand der Technik bevorzugt Halbleiter- und insbesondere Siliziumstrukturen bislang diese Eigenschaften nicht aufwiesen.

Weiterhin ist ein verbesserter, weil höherer dynamischer Messbereich aufgrund der Elastizität über weite Strecken erreichbar (>10⁶ Skalenintervalle). Auch die Bandbreite der messbaren Dehnungsänderung ist aufgrund der geringen Abmessungen und somit Trägheiten der Struktur sehr hoch. Mit einer Halbleiter MEMS Messanordnung lässt sich dabei um ein gegenüber resistiven Messanordnungen vielfach erhöhter k-Faktor realisieren (ca. 100 statt ca. 2). Weiterhin sind die Dehnmessstrukturen dieser Vorzugsvariante besonders flexibel im Design dank der vielfältigen Gestaltungsmöglichkeiten dieser Grundidee und der ausgereiften Herstellungstechniken insbesondere für Halbleiter (Silizium) MEMS Strukturen. Die so realisierbaren Federstrukturen haben eine hohe Sensibilität über einen weiten Messbereich dank der über einen großen Stauchungs- bzw. Streckungsbereich gegebenen Elastizität der Strukturen. Auch die Linearität des Signals ist über den gesamten Messbereich gegenüber Vorrichtungen zur Dehnungsmessung des Standes der Technik stark verbessert. Die bevorzugten Halbleiter Strukturen und insbesondere die Silikon- bzw. Siliziumstrukturen sind materialbedingt und aufgrund der Strukturierung ermüdungsfrei, was die Robustheit und Langlebigkeit der Vorrichtung verbessert. Die bevorzugte Dehnungsmessstruktur weist dabei eine hohe Immunität gegenüber Objektdehnungen außerhalb einer bevorzugten Messrichtung und/oder -ebene auf. Weiterhin sind insbesondere aufgrund der großen Gestaltungsfreiheit mit vielen Freiheitsgraden stark verbesserte Möglichkeiten zu einer Feinsteuerung experimenteller Parameter gegeben. Es können bei der Herstellung übliche Materialien und Herstellungsvorrichtungen verwendet werden. Durch die Piezoresistoren, welche direkt in der Federstruktur vorliegen, ist die Dehnmessstruktur besonders kompakt. Das Rauschen einer Halbleiter-MEMS-Struktur mit dotierten Bereichen ist gegenüber Vorrichtungen zur Dehnungsmessung des Standes der Technik stark verbessert. Die Herstellung ist dabei insbesondere kompatibel mit Standard CMOS Technologie, wodurch Herstellungskosten gesenkt werden und Zeit gespart wird. Es können universelle Fabrikationstechnologien verwendet werden, wodurch die Herstellung weiter verbilligt wird, Materialkosten gespart werden und eine hohe Flexibilität bei der Herstellung gewahrt wird. Es resultieren geringe Herstellungskosten bei hohen Stückzahlen, sowie eine einfach realisierbare Massenanfertigung in MEMS Technologie. In einer weiteren bevorzugten Ausführungsform der Erfindung umfasst die (Halbleiter) MEMS-Federstruktur mindestens vier Halbleiter-Dehnmessstreifen, welche in mindestens einer Vollbrücke installiert vorliegen. Durch somit vier aktive "Sensoren" in einer Messanordnung zur Dehnungsmessung in Vollbrücke (statt üblicherweise nur 1 DMS) wird eine physikalische Temperaturkompensation vorgenommen, da "Messwiderstände" (Halbleiter-Dehnmessstreifen) auf super-kleinstem Raum auf gleicher Temperatur vorliegen. Es ergibt sich eine nahezu ideale Kennlinie der Messanordnung. Auch die im Wesentlichen gleichen mechanischen Beträge der Beanspruchung werde durch die vier Halbleiter-Dehnmessstreifen erfahren. So ergibt sich eine verbesserte Sensitivität, Offset, Linearität, TKS und/oder TKO. TK steht allgemein für Temperaturkoeffizient; TKR bezeichnet insbesondere den Koeffizienten für die Widerstandsänderung über die Temperatur (eine unerwünschte aber physikalisch bedingte Beeinflussung der Messung - im Stand der Technik mittunter höher im Signal als die Messung der Dehnung). Der TKR wird in dieser Ausführungsform über eine Messbrücke kompensiert, da hier Widerstandsänderung mit unterschiedlichem Vorzeichen Signalwirksam sind und gleiche Änderungen gegenseitig ausgelöscht werden. Dies funktioniert vorliegend besonders gut aufgrund der räumlichen Nähe der Messwiderstände. Der Temperaturkoeffizient TKS der Brückenausgangsspannung bzw. der relativen Brückenausgangsspannung über die Last (Sensitivität) sollte theoretisch null sein, ist es aber aufgrund geometrischer Asymmetrien und real unterschiedlicher Temperatur der Einzelwiderstände im Stand der Technik oftmals nicht. Aufgrund dieser Asymmetrien entsteht gleichzeitig ein unerwünschter Signal-Offset am Last-Nullpunkt (Brückenausgang ungleich null, trotz Lastfreiheit). Auch dieser ist temperaturabhängig, hat einen Temperaturkoeffizienten TKO, was die elektronische oder digitale Kompensation wiederum erschwert. Aufgrund der räumlichen Nähe der Messwiderstände in Vollbrücke sind diese Temperaturkoeffizienten in der beschriebenen Ausführungsform stark verbessert.

Es kann in dieser Ausführungsform eine hohe und verbesserte Genauigkeit bei der Ermittlung des örtlichen Spannungstensors realisiert werden. Aufgrund der sehr kleinen Struktur kann ein geringer Fehler lateraler Gradienten bei der Dehnungsmessung erzielt werden, alle Messwandler (Halbleiter-Dehnmessstreifen) befinden sich im Wesentlichen in einer Ebene (der Ebene, in der die Messanordnung vorliegt), wodurch Fehler durch Mehrschichtsysteme mit einem "out-of-plane" Stressabbau vermieden werden können. Aus dem Stand der Technik sind mehrere DMS in einer Brücke nur als DMS-Rosette bekannt, welche in jeweils verschiedene Richtungen vorliegen und verschiedene Belastungen und/oder Temperaturen aufgrund ihrer großen Größe und Anordnung an nicht identischen Orten erfahren. Daher sind diese Brückenanordnungen des Standes der Technik bzgl. Sensibilität und Fehlerminimierung nicht vergleichbar.

In einer weiteren bevorzugten Ausführungsform der Erfindung ist ein Substrat der Messanordnung ausgewählt aus einer Gruppe umfassend Halbleitermaterialien, bevorzugt umfassend Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid. Diese Materialien sind in der Halbleiter- und/oder Mikrosystemherstellung besonders einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, thermischen und/oder mechanischen Eigenschaften zu erzielen.

Vorteilhafterweise sind die Materialien mikro-strukturierbar und/oder über ein additives Mikro-Herstellungsverfahren herstellbar.

In einer weiteren bevorzugten Ausführungsform der Erfindung umfasst die Messanordnung ein Polymer. Eine Messanordnung umfassend Polymer ist besonders einfach und kostengünstig herzustellen, dabei robust und wartungsarm. Insbesondere für einfache und kostengünstige Standarddehnmessstrukturen ist eine Verwendung von Polymer geeignet.

In einer weiteren bevorzugten Ausführungsform der Erfindung umfasst der Träger eine Rahmenstruktur. Eine Rahmenstruktur bezeichnet insbesondere eine Struktur, welche im Wesentlichen durch eine durchgehende äußere Umrandung eines frei bleibenden flächigen Bereichs gebildet wird, welche diese Fläche einfasst. Die Rahmenstruktur ist dabei bevorzugt stabil und biegesteif. Bei einer eckigen Rahmenform (dreieckiger, viereckiger oder allgemein mehreckiger Umriss) werden die einzelnen Kanten, die die Rahmenstruktur bevorzugt im Wesentlichen bilden, insbesondere Streben genannt. Eine Rahmenstruktur ist bevorzugt eine viereckige Anordnung von miteinander an den Eckpunkten in Verbindung stehenden Streben innerhalb einer Ebene. Dabei können die Sollbruchstellen bevorzugt an den Ecken des Rahmens, insbesondere jedoch an beliebigen Stellen der Streben vorliegen und den Rahmen in verschiedene Bereiche aufteilen. Eine Rahmenstruktur bietet besonders vielfältige Möglichkeiten zur Anordnung einer oder mehrerer Messanordnungen, welche bevorzugt den Rahmen von einer Seite zur anderen überspannen und dabei zwischen mindestens zwei Bereichen vorliegen. Gleichzeitig ist eine Dehnmessstruktur umfassend eine Rahmenstruktur besonders leicht und dennoch robust. Eine Rahmenstruktur ist insbesondere für eine verbesserte Dehnungsmessung entlang einer Fläche eines Objekts, insbesondere einer Fläche, welche in einer zweidimensionalen Ebene liegt, geeignet.

In einer weiteren bevorzugten Ausführungsform der Erfindung umfasst die Rahmenstruktur mindestens drei Bereiche, wobei zwischen jedem Bereich und mindestens einem anderen Bereich eine Messanordnung vorliegt, wobei die Dehnungsmessstruktur eine Dehnungsmessrosette ist, welche konfiguriert ist für eine mehrachsige Dehnungsmessung. Dehnungsmessrosetten, welche mehrere DMS in verschiedene Richtungen aufweisen, sind aus dem Stand der Technik bekannt. Durch sie sind 2-achsige Spannungs-/ Dehnungszustände vollständig bestimmbar. Bekannte Anordnungen aus dem Stand der Technik sind dabei die 45°-Rechtwinkel-Rosette und die 60°-Delta-Rosette. Gegenüber DMS-Rosetten aus dem Stand der Technik sind hier nicht DMS in verschiedene Richtungen angeordnet, sondern die Messanordnungen. Diese können dabei durchaus mehrere einzelne Messsensoren bzw. Elemente zur Dehnungsmessung aufweisen, wie bereits obenstehend bei den Halbleiter-Dehnmesssteifen der MEMS-Federstruktur beschrieben wurde, welche z. B innerhalb einer einzigen Messanordnung in einer Vollbrücke vorliegen können. Bei der vorliegenden Dehnmessrosette können mindestens 2 Messanordnungen in aus dem Stand der Technik bekannter Weise angeordnet werden, welche dabei mindestens drei Bereiche der Dehnmessstruktur verbinden, welche nach einer Aktivierung nicht mehr direkt miteinander in Verbindung stehen, separat mit einer Fläche des Objekts gefügt sind und daher eine hohe Messsensibilität erlauben. Durch die bevorzugt kompakte Ausführung der Dehnmessrosette können so sehr genaue Aussagen über die Dehnung eines Objekts in verschiedene Richtungen einer Ebene getroffen werden.

In einer bevorzugten Ausführung der beschriebenen Dehnmessrosette ist der Rahmen rechteckig und die vier Streben des Rahmens umfassen ungefähr mittig quer zur Längsrichtung der Streben liegende Sollbruchstellen. Der Rahmen wird somit bevorzugt in vier Bereiche aufgeteilt, wobei zwischen 3 Bereichen und dem vierten Bereich jeweils eine Messanordnung, also insgesamt drei Anordnungen vorliegen, welche allesamt eine Seite/ein Ende in einer Ecke des vierten Bereichs der Rahmenstruktur aufweisen und sich jeweils zu einer der drei anderen Ecken der Rahmenstruktur in jeweils einem der drei anderen Bereich erstrecken. Dabei sind die Messanordnungen wie eine 45 °Rechtwinkel-Rosette des Standes der Technik in Winkelabständen von 45 ° zueinander angeordnet. Ebenso kann es bevorzugt sein, dass die rechteckige Rahmenstruktur durch die Sollbruchstellen in drei Bereiche aufteilbar ist, wobei ein erster Bereich durch eine Strebe der Rahmenstruktur und die anderen Bereiche jeweils durch L-förmige Elemente gebildet werden, welche jeweils eine weitere Strebe und die Hälfte einer senkrecht zu dieser Strebe angeordneten Strebe umfassen. Die drei Messanordnungen liegen dabei bevorzugt zwischen den jeweiligen Ecken der L-förmigen Elemente und der Mitte der Strebe, welche den ersten Bereich bildet, vor und bilden dabei bevorzugt eine Messanordnung analog zu einer 60 ° Delta-Rosette des Standes der Technik.

Dabei kann wie erwähnt jede einzelne Messanordnung mehrere einzelne Messsensoren bzw. Elemente zur Dehnungsmessung aufweisen, wie z. B. die beschriebenen Halbleiter-Dehnmesssteifen. Diese können dabei insbesondere in einer Vollbrücke vorliegen. So kann auch bei mehrachsiger/mehrdimensionaler Dehnungsmessung des zu vermessenen Objekts eine sehr empfindliche und stark verbesserte Dehnungsmessung bereitgestellt werden. Eine Messanordnung kann ebenfalls mehrere Vollbrücken umfassen, wodurch eine mehrdimensionale Dehnungsmessung weiter verbessert werden kann.

In einer weiteren bevorzugten Ausführungsform der Erfindung ist die Ausrichtung der Messanordnungen in der Rahmenstruktur konfiguriert für einen Ausgleich anisotroper elastischer und/oder piezoresistiver Eigenschaften des Substrats (bevorzugt der Messanordnung). Es ist bekannt, dass bevorzugt Halbleitermaterialien und insbesondere Silizium anisotrope elastische und/oder piezoresistive Eigenschaften aufweisen können. Damit diese bei einer Messanordnung, z. B. einer eine Halbleiter MEMS-Federstruktur mit Halbleiter-Dehnmessstreifen die Dehnungsmessung nicht verfälschen, kann durch geeignete Strukturierung der Messanordnung und/oder eine geeignete Auswertung der durch die Messanordnung ausgeführte Dehnungsmessung dieser Effekt minimiert werden. Es kann jedoch je nach Anwendung und Strukturierung weiterhin Anisotropien geben, welche die Dehnungsmessung beeinflussen können. Dies ist insbesondere bei einer Dehnungsmessung in mehr als eine Richtung der Fall, da eine Messanordnung dann ebenso eine Dehnung bzw. Streckung und/oder Stauchung nicht nur entlang der Vorzugsachse erfahren kann. Da für solche Messungen typischerweise Dehnungsmessrosetten verwendet werden, kann eine Anisotropie bevorzugt durch individuelle Anordnung bzw. Ausrichtung der Messanordnungen ausgeglichen werden, welche eine Anisotropie kompensiert. Die Ausrichtung kann bevorzugt den Winkel umfassen, der zwischen der Messanordung und einer Parallelen einer Kante einer eckigen Rahmenstruktur vorliegt. Ebenso kann die Ausrichtung bevorzugt in Form eines Winkels angegeben werden, welcher zwischen der ausgerichteten Messanordnung und einer Standardmessanordnung einer DMS-Rosette gebildet wird. Ein Fachmann weiß, wie er eine Anordnung der Messanordnungen vornehmen muss, um Anisotropien auszugleichen. Dabei sind die Anisotropien der Messanordnung grundsätzlich bekannt und abhängig von Material und/oder Strukturierung. Anisotropien bestimmter Eigenschaften sind dabei bevorzugt in Form eines Tensors gegeben. Auch die bevorzugten Richtungen, in denen eine Dehnungsmessung vorgenommen werden soll, sind bekannt. Somit kann ein Fachmann Berechnungen und/oder Simulationen anstellen, bevorzugt an einem Computer, mit denen er eine bevorzugte Konfiguration, insbesondere eine Ausrichtung, vor allem in Form eines Winkels, der Messanordnungen der Dehnmessrosette herausfinden kann, durch die Anisotropien kompensiert werden.

In einer weiteren bevorzugten Ausführungsform der Erfindung ist ein Substrat des Trägers ausgewählt aus einer Gruppe umfassend Halbleitermaterialien, bevorzugt umfassend Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid. Diese Materialien sind in der Halbleiter- und/oder Mikrosystemherstellung besonders einfach und kostengünstig zu bearbeiten und eignen sich ebenfalls gut für eine Massenherstellung. Die Trägerstruktur kann aufgrund der Materialien und/oder Herstellungsweisen überraschend flexibel hergestellt werden. Insbesondere in Verbindung mit einem Substrat der Messanordnung umfassend ebenfalls Halbleitermaterialien ist eine besonders einfache Herstellung und/oder eine Herstellung aus einem einzigen gemeinsamen Substrat für Messanordnung und Träger möglich, wodurch die Herstellung weiter vereinfacht und verbilligt wird und eine besonders kompakte, robuste und/oder flexible geformte Dehnmessstruktur bereitgestellt werden kann.

In einer weiteren bevorzugten Ausführungsform der Erfindung umfasst der Träger ein Polymer. Dadurch können billige und einfache Dehnmessstrukturen hergestellt werden, insbesondere in Verbindung mit einer Messanordnung ebenfalls aus Polymer.

In einer weiteren bevorzugten Ausführungsform der Erfindung ist der Träger konfiguriert für eine mechanische und/oder thermische Aktivierung. Die Aktivierung beschreibt bevorzugt das Auftrennen und/oder kontrollierte Brechen des Trägers in die Bereiche. Das Auftrennen soll dabei bevorzugt nach einem Fügen der Dehnmessstruktur auf ein Objekt stattfinden, so dass die grundsätzliche Struktur der Vorrichtung erhalten bleibt, wobei die Anordnung nun nicht durch den Träger, sondern durch die auf das Objekt gefügten Bereiche zusammengehalten wird. Die einzelnen Bereiche bewegen sich dabei bevorzugt mit der sich dehnenden Fläche des Objekts, wobei mit Hilfe der Messanordnung zwischen den Bereichen diese Dehnung gemessen werden kann. Das Auftrennen und/oder kontrollierte Aufbrechen des Trägers soll dabei bevorzugt durch gezielt an den Sollbruchstellen eingebrachte Kraft und/oder Energie erreicht werden, wobei Träger und/oder Sollbruchstelle konfiguriert sind, durch die zugefügte Energie- und/oder Kraftform nachzugeben. Wenn mechanische Aktivierung vorgesehen ist, dann ist die Sollbruchstelle bevorzugt durch eine Verjüngung und/oder teilweise Perforation der Trägerstruktur an der Sollbruchstelle konfiguriert, so dass eine gezielte mechanische Krafteinwirkung, z. B. in Form von Druck und/oder durch ein Schneiden, für ein Nachgeben und/oder Auftrenne dieser abgeschwächten Struktur entlang der Sollbruchstelle sorgt. Weiterhin kann konfiguriert für eine mechanische Aktivierung bevorzugt bedeuten, dass die Dehnmessstruktur eine Vorrichtung, insbesondere einen Aktuator umfasst, durch den die mechanische Krafteinwirkung ausgelöst werden kann. Der Aktuator kann z. B. ausgesucht sein aus der Gruppe umfassend elektrostatischer Aktuator, piezoelektrischer Aktuator, elektromagnetischer Aktuator und/oder thermischer Aktuator. Dabei kann der Aktuator insbesondere ein MEMS-Aktuator sein. Der Aktuator kann dabei weiterhin bevorzugt konfiguriert sein für eine Ansteuerung durch eine Steuereinrichtung. Eine mechanische Aktivierung ist besonders gut steuerbar.

Es kann ebenso eine thermische Aktivierung bevorzugt sein. Diese kann z. B. durch einen Heizdraht an der Sollbruchstelle realisiert werden. Dabei kann das Material selber ebenso durch eine Verjüngung und/oder teilweise Perforation der Trägerstruktur an der Sollbruchstelle für ein thermisches Aktivieren konfiguriert sein. Insbesondere ist dabei das Trägermaterial und/oder das Material der Sollbruchstelle geeignet sein für ein Aufschmelzen und/oder aufbrechen des Trägers an der Sollbruchstelle aufgrund der eingebrachten thermischen Energie. Die Sollbruchstelle kann in manchen Realisierungen dabei aus einem anderen Material bestehen als der restliche Träger. Die thermische Aktivierung, z. B. durch ein zu erhitzendes Material, kann dabei konfiguriert sein für eine Ansteuerung durch eine Steuereinrichtung. Ein thermisches Aktivieren kann dabei z.B. auch realisiert werden durch einen Laser, dessen Strahlung bei einer Absorption an der Sollbruchstelle thermische Energie bereitstellt. Eine Aktivierung durch thermische Energie ist besonders leicht zu realisieren. Ebenso ist eine thermische Aktvierung bevorzugt besonders schonend für das Objekt und/oder die restliche Dehnmessstruktur und verfälscht die Messung besonders wenig.

In einer weiteren bevorzugten Ausführungsform der Erfindung umfasst der Träger mindestens ein elektrisches Heizelement zur thermischen Aktivierung. Ein elektrisches Heizelement ist bevorzugt ein Element, welches durch Anlegen einer elektrischen Spannung und/oder elektrischen Stromdurchfluss Wärme in Form joulescher Wärme erzeugt. Bevorzugt umfasst das elektrische Heizelement ein MEMS-Heizelement, welches durch ein fein strukturiertes leitfähiges Material, z. B. in Form einer Beschichtung gebildet wird. Das Heizelement umfasst dabei bevorzugt eine Kontaktierung zur elektrischen Ansteuerung. Ein solches Heizelement ist besonders einfach und kompakt zu realisieren.

In einer weiteren bevorzugten Ausführungsform der Erfindung ist der Träger konfiguriert für elektrisches und/oder chemisches Fügen. Ein elektrisches Fügen umfasst insbesondere ein Löten, Schmelzen und/oder Schweißen, welches durch Zufuhr elektrischer Energie ausgelöst und/oder unterstützt wird. Durch das elektrische Fügen wird bevorzugt jeder Bereich in der Fügezone mit dem Objekt gefügt. Dabei ist bevorzugt, dass das Material des Trägers, insbesondere des Bereichs und/oder das Material des Objekts geeignet sind für ein elektrisches Fügen durch Löten, Schmelzen und/oder Schweißen, in dem sie bei der im jeweiligen Prozess bereitgestellten Temperatur zumindest teilweise schmelzen und danach aushärten, wobei bevorzugt eine stoffschlüssige Fügeverbindung zwischen Fügezone des Bereichs und Objekt entsteht. Dabei ist bevorzugt, dass der Träger selber eine Vorrichtung in Form eines elektrisch leitfähigen Drahts, einer elektrisch leitfähigen Spitze und/oder eine Elektrode aufweist, um ein Schmelzen, Löten und/oder Schweißen mit dem Objekt vorzunehmen. Bevorzugt ist die Vorrichtung dabei durch eine Steuereinrichtung ansteuerbar, so dass ein fernausgelöstes Fügen ermöglicht wird. Ebenso kann ein elektrisches Fügen durch neuartige, elektrisch leitfähige Klebematerialien erreicht werden, welche in einem ersten Zustand flüssig vorliegen und durch Stromdurchfluss erhitzt und dabei zu einem Aushärten und einem bevorzugt stoffschlüssigen Fügen gebracht werden können. Ein elektrisches Fügen ist besonders gut durch Steuereinrichtung auch aus der Ferne steuerbar, so dass ein Fügen auch sehr kleiner und/oder schwer zugänglicher Dehnmessstrukturen sehr einfach möglich ist.

Ein chemisches Fügen umfasst insbesondere ein Kleben. Der Fachmann weiß, welche Klebstoffe für die Verbindung bestimmter Materialien, Umgebungseigenschaften (Temperatur, Feuchtigkeit) und/oder Flächen geeignet ist. Auch ein chemisches Fügen kann aus der Ferne ausgelöst werden, z. B. durch Bereitstellen thermischer Energie in Form joulescher Wärme (elektrisch erzeugt) und/oder elektromagnetischer Strahlung z. B. durch einen Laser, welches bevorzugt ein Aushärten des Klebers verursacht.

Auch ein direktes Fügen durch die von einer elektromagnetischen Strahlung eines Lasers bereitgestellte Energie in Form von Schmelzen, Löten und/oder Schweißen ist möglich. Insbesondere bei einem elektrisch und/oder durch einen Laser ausgelöstes Fügen ist es möglich, durch eine Vorrichtung integriert sowie Aktivieren als auch Fügen, insbesondere in einem einzigen Prozess, zu realisieren.

Insbesondere ist ein sogenanntes reaktives Fügen bevorzugt. Reaktives Fügen bezeichnet insbesondere ein Verfahren für Anwendungen in der Elektro- oder Mikrosystemtechnik, bei dem besondere Eigenschaften von sogenannten Reaktivmultischichten (RMS) genutzt wird. RMS umfassen einen Stapel aus bevorzugt wenigen Nanometer dicken Materialschichten, welche bei geeigneter, bevorzugt thermischer Aktivierung (Zündung) in einer exothermen Reaktion Wärmeenergie für einen Lötprozess freisetzen können. Die Reaktion resultiert bevorzugt in einer Legierungsbildung, wobei die frei werdende Energie für eine Erwärmung des Schichtsystems sorgt. Dadurch werden bevorzugt Lotschichten aufgeschmolzen, um einen Lötprozess zwischen zwei Fügepartnern durchzuführen. Dabei wird bevorzugt für eine Verbesserung der entstehenden Lötverbindung ein Zusammenpressen der Fügepartner durchgeführt. Die bevorzugt verwendeten RMS (Ni/Al- und Pd/Al-Multischichten, mit oder ohne zusätzlicher Lotschicht) werden insbesondere durch Sputtern hergestellt. Die RMS werden dann bevorzugt durch Fotolithografie und nasschemische Ätzprozesse, Lift-Off-Verfahren und/oder mittels Laser strukturiert. Die Zündung der RMS wird bevorzugt durch einen elektrischen Funken initiiert. Eine geeignete Vorrichtung zur Erzeugung eines elektrischen Funkens ist bevorzugt umfasst, wobei diese besonders bevorzugt (extern) durch eine Steuervorrichtung angesteuert werden kann. Bei diesem Verfahren kommt es aufgrund der überraschend kurzen Einwirkzeiten der Wärmeenergie zu einer äußerst geringen thermischen Belastung der gefügten Elemente, auch temperaturempfindliche Objekte können vorteilhafterweise gefügt werden. Des Weiteren kommt dadurch zu geringen mechanischen Spannungen nach dem (Stress) nach dem Fügeprozess, wodurch die Dehnungsmessung verbessert wird. Die reaktiven Schichten können bevorzugt mit dem Laser strukturiert werden, wodurch überraschenderweise auch komplexe geometrische Strukturen realisiert werden können. Außerdem sind die Fügeverbindungen bevorzugt metallisch und insbesondere mechanisch fest und langzeitstabil und weisen eine gute elektrische und thermische Leitfähigkeit auf.

Diese Ausführungsform, insbesondere das Fügen durch elektrische Bereitstellung thermischer Energie erlaubt eine erhebliche Vereinfachung der Sensor-Montage. Bevorzugt wird insbesondere die MEMS DMS Rosette dabei gleichzeitig elektrisch aktiviert, d.h. der Chiprahmen wird durch elektrische Heizung gebrochen. Dadurch ist die Dehnmessstruktur robust in der Handhabung, da die Aktivierung die erst nach der Montage (und dem Fügen) auf dem Objekt stattfindet. So kann ein robuster, mehrachsiger Halbleiter-DMS mit hoher Empfindlichkeit, bereitgestellt werden, der sowohl elektrisch (auch aus der Ferne gesteuert) gefügt als bevorzugt ebenso elektrisch gesteuert aktiviert werden kann. Daher ist bevorzugt das Handling besonders vereinfacht, Materialaufwand und Handling, insbesondere für das typische Kleben, können teilweise entfallen. Es entsteht eine Art Plug & Play Dehnmessstruktur mit Sofort-Montage ohne Aushärtezeit (Auflegen, Einschalten, fertig).

In einer weiteren bevorzugten Ausführungsform der Erfindung ist der Träger konfiguriert für eine elektrische Kontaktierung und/oder eine drahtlose Übertragung elektrischer Energie. In dieser Ausführungsform soll die elektrische Energie zwischen der Dehnmessstruktur und einer Auswert- und/oder Steuereinrichtung übertragen werden. Die Übertragung elektrischer Energie erfüllt bevorzugt mindestens einen der folgenden Zwecke: Ansteuerung und Auslesung der Messanordnung durch Übertragung elektrischer Signale, Auslösen des Fügens, z. B. durch Übertragung der elektrischen Energie zur lokalen Bereitstellung von Wärme in der Fügezone und/oder Aktivierung der Dehnmessstruktur elektrisch gesteuert, z. B. durch einen Aktuator oder durch joulesche Wärme. Eine elektrische Kontaktierung kann bevorzugt durch direkte Übertragung elektrische Energie durch Drähte und/oder Kabel geschehen, wobei der Träger geeignete Kontakte für eine elektrische Kontaktierung und oder auf dem Träger selber Verdrahtungen und/oder Leiterbahnen umfasst, welche z. B. den Träger mit der auszulesenden Messanordnung verbindet. Ebenso kann die elektrische Energie bevorzugt drahtlos übertragen werden, z. B. durch elektromagnetische Strahlung, insbesondere induktiv und/oder kapazitiv. Dafür kann der Träger neben internen Verdrahtungen und/oder Leiterbahnen mindestens eine Elektrode und/oder Spule zur kapazitiven und/oder induktiven Übertragung von elektrischer Energie aufweisen. Dabei kann die Steuer- und/oder Auswerteinrichtung bevorzugt einen geeigneten Gegenpart aufweisen.

Die Steuer-und/oder Ausleseeinrichtung umfasst dabei bevorzugt einen Prozessor, beispielsweise einen Mikroprozessor. Es können auch andere integrierte Schaltungen, welche in der digitalen Elektronik zur Steuerung verwendet werden, zum Einsatz kommen. Die Übertragung elektrischer Energie ist dabei bevorzugt bzgl. übertragbarer Bandbreite der Signale etc. so ausgewählt, dass bspw. ein Auslesen der Messanordnung mit der geeigneten Messgenauigkeit und/oder Rate vorgenommen werden kann.

In dieser Ausführungsform kann die Dehnmessstruktur besonders einfach extern gesteuert, d. h. insbesondere gefügt, aktiviert und/oder ausgelesen werden. Dabei kann die Struktur selber besonders kompakt sein und an unzugänglichen Stellen am zu vermessenen Objekt vorliegen.

In einem weiteren Aspekt betrifft die Erfindung ein Herstellungsverfahren für eine Dehnungsmessstruktur nach der vorstehenden Beschreibung, wobei die Herstellung folgende Schritte umfasst:
- Ätzen eines Substrats für den Träger und/oder die Messanordnung;
- Vorzugsweise Strukturierung des Trägers und/oder der Messanordnung;
- Vorzugsweise Dotierung der Seitenwände der Messanordnung für eine Integration mindestens eines Halbleiter-Dehnmessstreifens;
- Vorzugsweise elektrische Kontaktierung des Trägers.

Als Substrat kann z. B. eines der bevorzugten, vorstehend genannten Materialien verwendet werden. Beim Ätzen kann ein Rohling, beispielsweise ein Wafer, in die gewünschte Grundform der Dehnmessstruktur gebracht werden. In einem nächsten Schritt werden bevorzugt Teile der Messanordnung dotiert, damit mindestens ein piezoresistiver Bereich entsteht. Sollte eine weitere Strukturierung der Struktur gewünscht sein, kann dies z. B. durch weitere Ätzprozesse vorgenommen werden. Ebenso kann zusätzliches Material abgeschieden werden Zur Kontaktierung des Trägers kann zusätzlich geeignetes Material, wie z. B. Kupfer, Gold und/oder Platin auf dem leitfähigen Material durch gängige Prozesse abgeschieden werden. Hierfür können bevorzugt physikalische Gasphasenabscheidung (PVD), chemische Gasphasenabscheidung (CVD) oder elektrochemische Abscheidung zum Einsatz kommen.

Auf diese Weise kann ein besonders fein strukturierte Dehnmessstruktur, z. B. eine MEMS-Struktur hergestellt werden, welches bevorzugt Abmessungen im Mikrometerbereich sowie die gewünschten funktionellen Eigenschaften hat. Ebenso haben sich diese Herstellungsschritte besonders bewährt und gehören zu Standardverfahrensschritten der Halbleiterprozessierung.

In einer bevorzugten Ausführungsform des Herstellungsverfahrens ist ein Ätzen und/oder eine Strukturierung ausgewählt aus der Gruppe umfassend Trockenätzen, nasschemisches Ätzen und/oder Plasmaätzen, insbesondere Reaktives lonenätzen, Reaktives lonentiefenätzen (Bosch-Prozess); und/oder das Dotieren ausgesucht ist aus der Gruppe umfassend Diffusion, Ionenimplantation und/oder Neutronen-Transmutationsdotierung.

Diese Verfahren sind für die Herstellung von feinen Strukturen mit Größenordnungen im Mikrometerbereich und/oder zur Halbleiterprozessierung und/oder Dotierung besonders geeignet. Insbesondere durch den Boschprozess können sehr feine Strukturen mit hohem Aspektverhältnis erzeugt werden, die für eine funktionelle, kompakte und effiziente Struktur äußerst vorteilhaft sind.

In einem weiteren Aspekt betrifft die Erfindung ein System umfassend
a) eine Dehnungsmessstruktur gemäß einem der vorherigen Ansprüche 1-16;
b) eine Steuereinrichtung
wobei die Steuereinrichtung konfiguriert ist für ein Auslesen der Messanordnung sowie bevorzugt für ein elektrisches und/oder chemisches Fügen und/oder einer Aktivierung der Dehnungsmessstruktur.

Die Steuereinrichtung ermöglicht bevorzugt eine Eingabe und setzt diese Eingabe in geeignete Steuersignale um. Eine Eingabe kann beispielsweise ein Signal zum Fügen, zum Aktivieren und/der zur Ansteuerung der Messanordnung sein. Die Steuereinrichtung erzeugt dann in erster Linie entsprechende analoge elektrische Signale, welche an die Struktur weitergegeben werden. Ebenso ermöglicht die Steuereinrichtung bevorzugt das Anlegen eines Ausgangssignals einer Messanordnung als Eingangssignal, welches von dieser in auswertbare Messsignale umgesetzt wird. So können diese Signale bevorzugt, z. B. in digitaler Form, an einen Computer zur weiteren Auswertung und/oder Abspeicherung übermittelt werden. Ein Auslesen kann dabei ein sampeln (Abtasten), und/oder wandeln (z. B. Analog-Digital-Wandler) umfassen. Dabei kann bspw. ein analoges Messsignal, z. B. in Form einer elektrischen Spannung, in ein digitales Signal zur Auswertung durch einen PC überführt werden.

Die Verwendung eines solchen Systems umfassend eine geeignete Steuereinrichtung kann die gewünschte Verwendung der Dehnmessstruktur erheblich vereinfachen. Eine Steuereinrichtung liegt bevorzugt extern, in einer Entfernung zur Dehnmessstruktur vor, wobei die Übertragung zwischen Struktur und Steuereinrichtung drahtlos und/oder kabelgebunden sein kann. Die Steuereinrichtung kann auch auf der Dehnmessstruktur integriert vorliegen. Eine Steuereinrichtung, insbesondere in Form einer in den Emitter integrierten Steuerung, ist sehr kompakt und einfach zu handhaben. Die Steuereinrichtung weist bevorzugt eine geeignete Schnittstelle zur Verbindung bspw. mit einem Computer auf. Zwischen Steuereinrichtung und Struktur können bevorzugt weitere Daten, wie z. B. aktuelle Temperaturdaten der Struktur, andere Statusinformationen sowie ein Signal zum Ein- und Ausschalten der Dehnmessstruktur übertragen werden.

In einem weiteren Aspekt betrifft die Erfindung ein Verfahren zur Dehnungsmessung an einem Objekt, umfassend
- Bereitstellen einer Dehnungsmessstruktur oder eines Systems nach der vorstehenden Beschreibung;
- Fügen der Dehnungsmessstruktur mit einem Objekt;
- Aktivieren der Dehnungsmessstruktur;
- Auslesen der mindestens einen Messanordnung.

Der durchschnittliche Fachmann erkennt, dass technische Merkmale, Definitionen und Vorteile bevorzugter Ausführungsformen der erfindungsgemäßen Dehnmessstruktur und des Systems auch für das erfindungsgemäße Verfahren gelten. Bevorzugt können mehrere der Schritte Fügen, Aktivieren, Auslesen, insbesondere alle Schritte automatisiert und/oder über die Steuereinrichtung gesteuert werden.

In einem weiteren Aspekt betrifft die Erfindung eine Verwendung einer Dehnungsmessstruktur oder eines Systems nach der vorstehenden Beschreibung für eine Dehnungsmessung an einem Objekt. Auch hier erkennt der durchschnittliche Fachmann, dass technische Merkmale, Definitionen und Vorteile bevorzugter Ausführungsformen der erfindungsgemäßen Dehnmessstruktur und des Systems auch für die erfindungsgemäße Verwendung gelten. Durch die Dehnmessstruktur können insbesondere überraschend präzise und fehlerfreie Dehnungsmessungen durchgeführt werden. Auch sehr kleine Objekte und/oder Flächen von Objekten können bevorzugt vermessen werden. Auch schwer zugängliche Stellen, bspw. in einem Inneren eines Objekts, können nun besonders einfach und genau vermessen werden. Ebenso können Messungen mit einer ungekannten Präzision vorgenommen werden, welche im Stand der Technik nicht bekannt war. Dies liegt vor allem daran, dass jeder Bereich einzeln über die Fügezone mit dem Objekt gefügt werden kann und die Dehnmessstruktur im Wesentlichen keine die Dehnungsmessung beeinflussenden Kräfte auf das zu vermessende Objekt ausübt.

### Detaillierte Beschreibung

Im Folgenden soll die Erfindung anhand von Beispielen und Figuren erläutert werden, ohne auf diese beschränkt sein.

### Kurzbeschreibunq der Abbildungen

**Figur 1** zeigt eine schematische Darstellung der Dehnungsmessstruktur in einer Draufsicht.
**Figur 2** zeigt eine schematische Darstellung einer an einem Objekt gefügten Dehnungsmessstruktur in einer Seitenansicht.
**Figur 3** zeigt schematisch eine Anordnung einer Dehnungsmessrosette mit Federstrukturen.
**Figur 4** zeigt schematisch eine Halbleiter MEMS-Federstruktur mit Halbleiter-Dehnmessstreifen in den Seitenwänden.
**Figur 5** zeigt schematisch eine Anpassung der Dehnungsmessrosette an die anisotropen Eigenschaften des Substrats der Messanordnungen.

### Detaillierte Beschreibung der Abbildung

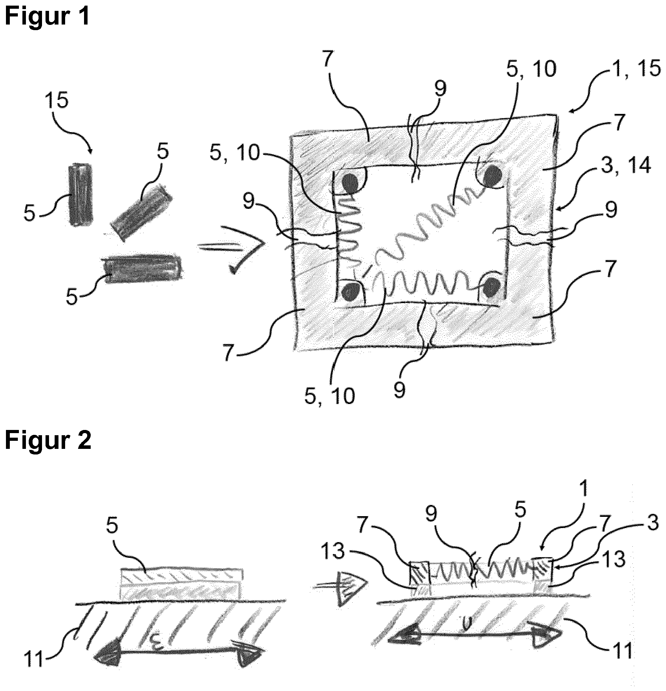

Figur 1 zeigt rechts eine schematische Darstellung der Dehnungsmessstruktur **1** in einer Draufsicht. Diese kann über Fügezonen **13** mit einem Objekt **11** verbunden werden und Dehnungsmessungen an diesem durchführen, z. B. über eine Fläche des Objekts **11.** Der strukturierte Träger **3** weist dabei eine Rahmenstruktur **14** auf. Dieser rahmenförmige Träger **3** weist vier Sollbruchstellen **9** auf, welche die Rahmenstruktur in vier Bereiche **7** aufteilt. Alle Bereiche sind dabei mit dem zu vermessenden Objekt **11** separat an den jeweiligen Fügezonen **13** fügbar. Die Bereiche **7** sollen dabei im ungefügten Zustand an den Sollbruchstellen **9** zusammengehalten werden. Erst nach einem Fügen der Dehnungsmessstruktur **1** an einem Objekt **11** wird der Träger **3** entlang der Sollbruchstellen **9** in die Bereiche **7** aufgetrennt (Aktiviert). Die Messanordnungen **5,** welche wie gezeigt eine Federstruktur **10** aufweisen und entlang dieser eine Dehnung messen können, liegen zwischen jedem Bereich und mindestens einem anderen Bereich vor und verbinden diese. So wird eine Dehnungsmessrosette **15** gebildet. Dehnungen des Objektes **11** entlang der gemessenen Fläche in beliebige Richtungen, die sich durch sich ändernde Entfernungen zwischen Bereichen **7** bemerkbar machen, werden durch jeweilige Messanordnungen **5** (Federstrukturen **10**) gemessen. Aus einer Auswertung der durch die verschiedenen Messanordnungen **5** gemessenen Dehnungen ergibt sich ein Gesamtbild der Dehnung des Objekts **11.** Es handelt sich hierbei um eine 45 °-Rechtwinkel-Rosette, wie sich an der Anordnung der Messanordnungen **5** erkennen lässt.

Links in Figur 1 ist schematisch eine 45 °-Rechtwinkel-Dehnungsmessrosette **15** des Standes der Technik mit in 45 °-Winkeln zueinander angeordneten Dehnmessstreifen **5** dargestellt.

Figur 2 zeigt eine schematische Darstellung einer an einem Objekt gefügten Dehnungsmessstruktur **1** (rechts) in einer Seitenansicht. Dabei ist links eine Messanordnung **5** des Standes der Technik dargestellt. Dieses ist auf die Fläche des zu vermessenden Objekts **11,** beispielsweise ein Substrat, ganzflächig aufgeklebt. Nachteilig dabei ist unter anderem, dass der Kleber selbst eine gewisse Steifigkeit aufweist, die die Messung verfälscht.

Bei der erfinderischen Dehnungsmessstruktur **1** hingegen sind die verschiedenen, durch mindestens eine Sollbruchstelle 9 getrennten Bereiche **7** des Trägers **3** separat an ihren jeweiligen Fügezonen **13** an die Fläche des Objekts **11** gefügt. So wird im Wesentlichen nicht die Steifigkeit des Klebers wie im Stand der Technik, sondern die tatsächliche Dehnung des Objekts **11** durch die Messanordnung **5** gemessen. Dafür wird die Dehnungsmessstruktur **1** aktiviert, indem der Träger **3** an den Sollbruchstellen **9** nach dem Fügen in die Bereiche **7** aufgetrennt wird.

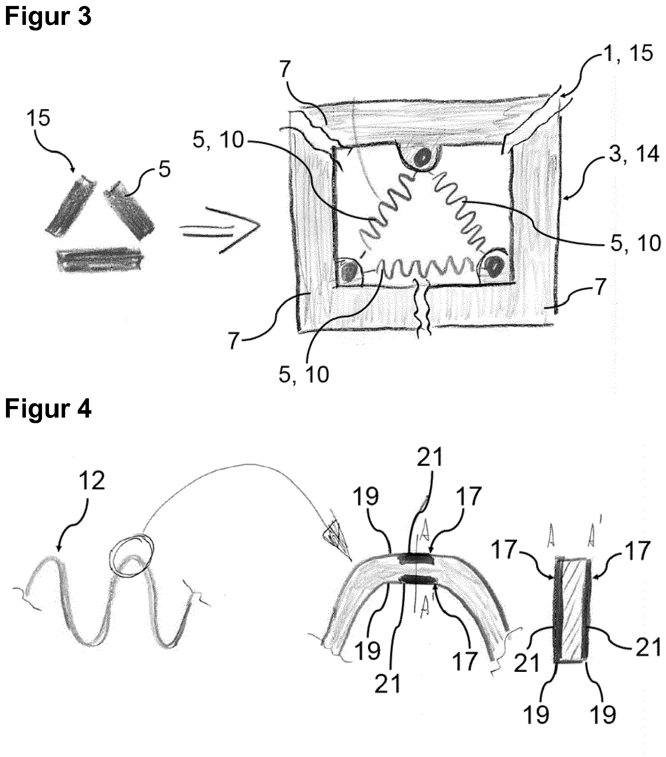

Figur 3 zeigt schematisch eine weitere Anordnung einer Dehnungsmessrosette mit Federstrukturen. Hierbei handelt es sich um eine sogenannte 60 °-Delta-Rosette, wie sie von der Grundstruktur her auch aus dem Stand der Technik (links in der Abbildung) bekannt sind. Die Messanordnungen **5** in Form von Federstrukturen **10** stellen dabei eine Verbindung von drei Bereichen **7** des durch drei Sollbruchstellen **9** unterbrochenen Trägers **3** in Form einer Rahmenstruktur **14** in Form eines gleichseitigen Dreiecks dar.

Figur 4 zeigt schematisch eine Halbleiter MEMS-Federstruktur **12** mit Halbleiter-Dehnmessstreifen **21** in den Seitenwänden **19** der Federstruktur. Der rechte, vergrößerte Ausschnitt der linken Messanordnung **5** in Form einer (Halbleiter) MEMS-Federstruktur **12** zeigt dabei in den Seitenwänden **19** auf zwei gegenüberliegenden Seiten eingelassene Halbleiter Dehnmessstreifen **21.** Diese können z. B. durch geeignet dotierte Bereiche **17** des Halbleiters implementiert werden. Wird nun aufgrund einer Dehnung des zu vermessenen Objekts **11** die Distanz zwischen zwei Bereichen **7** der Dehnungsmessstruktur **1** verändert, wird die MEMS-Federstruktur **12** gedehnt, wobei sich diese Dehnung auch auf die Halbleiter-Dehnmesssteifen **21** in dessen Seitenwänden **19** überträgt und somit durch diese gemessen werden kann. Es kann dabei bspw. durch geeignete Hochskalierung auf die gesamte Dehnung des Objekts **11** in die von der Messanordnung **5** gemessenen Achse bzw. Richtung geschlossen werden. Ebenso können bevorzugt in den jeweiligen Seiten der Seitenwände **19** der MEMS-Federstruktur **12** mehrere Halbleiter-Dehnmessstreifen **21** in Form dotierter Bereiche oder aber durchgängige Halbleiter-Dehnmessstreifen **21** vorliegen. Ganz rechts ist ein nochmal vergrößerter Ausschnitt der in den Seitenwänden **19** auf zwei gegenüberliegenden Seiten eingelassene Halbleiter Dehnmessstreifen **21,** z. B. durch dotierte Bereiche **17,** gezeigt.

Die in Figur 4 als Dehnmessstruktur **21** gekennzeichneten Bereiche können ebenso bevorzugt Elektroden eines kapazitiven Messsensors sein. Wird die Federstruktur **12** z. B. gedehnt, wird durch eine Elongation des Materials in Längsrichtung die Struktur in Querrichtung verjüngt bzw. schmaler. Dadurch werden die Platten angenähert, womit ebenso eine kapazitive Dehnungsmessung realisiert werden kann.

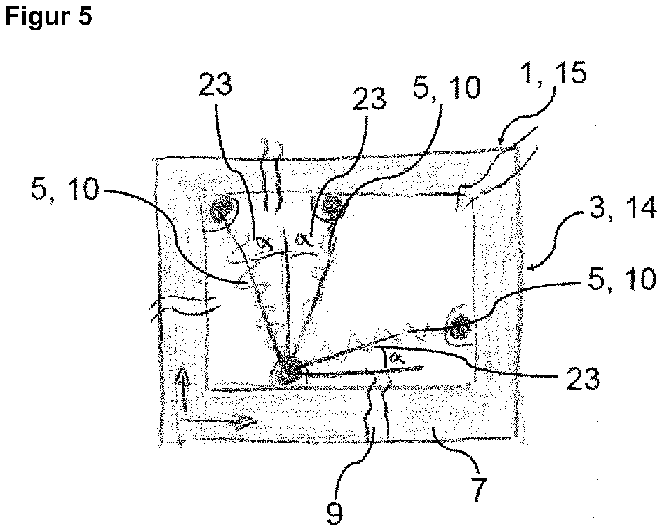

Figur 5 zeigt schematisch eine Anpassung der Dehnungsmessrosette **15** an die anisotropen Eigenschaften des Substrats der Messanordnungen **5.** Dabei sind die einzelnen Messanordnungen **5** in Form einer Federstruktur **10** nicht wie eine übliche 45 °-Rechtwinkel-Dehnungsmessrosette angeordnet, sondern weisen eine andere Ausrichtung **23,** dargestellt durch einen Winkel a, auf. Dieser ist angepasst an anisotrope elastische und/oder piezoresistive Eigenschaften des Substrats der Messanordnungen **5** und soll diese ausgleichen, damit bei Auswertung der Messanordnungen das Ergebnis übereinstimmt mit dem einer 45 °-Rechtwinkel-Dehnungsmessrosette, deren Dehnmessstreifen keine anisotropen Eigenschaften aufweisen.

### Bezugszeichenliste

- 1: Dehnungsmessstruktur
- 3: Träger
- 5: Messanordnung
- 7: Bereich
- 9: Sollbruchstelle
- 10: Federstruktur
- 11: Objekt
- 12: MEMS-Federstruktur
- 13: Fügezone
- 14: Rahmenstruktur
- 15: Dehnungsmessrosette
- 17: Dotierter Bereich
- 19: Seitenwand der Federstruktur
- 21: Halbleiter-Dehnmessstreifen
- 23: Ausrichtung (Winkel)

## Patentansprüche

1. Dehnungsmessstruktur (1) zur Dehnungsmessung an einem Objekt (11) umfassend
- einen strukturierten Träger (3),
- mindestens eine Messanordnung (5) zur einachsigen Dehnungsmessung,
**dadurch gekennzeichnet, dass**
das der Träger (3) mindestens zwei Bereiche (7) aufweist, welche durch eine Sollbruchstelle (9) voneinander getrennt sind, wobei die Messanordnung (5) zwischen zwei Bereichen (7) vorliegt, jeder Bereich (7) in einer Fügezone (13) fügbar mit dem Objekt (11) ist und wobei die Sollbruchstelle (9) konfiguriert ist für eine Aktivierung der Dehnungsmessstruktur (1) durch Auftrennen des Trägers (3) in die Bereiche (7).

2. Dehnungsmessstruktur (1) nach Anspruch 1,
**dadurch gekennzeichnet, dass**
die Messanordnung konfiguriert ist für eine resistive, bevorzugt eine piezoresistive, eine piezoelektrische, eine optische, einen magnetische, eine induktive und/oder eine kapazitive Dehnungsmessung.

3. Dehnungsmessstruktur (1) nach dem vorherigen Anspruch,
**dadurch gekennzeichnet, dass**
die Messanordnung eine Federstruktur (10) umfasst, welche konfiguriert ist für eine resistive, bevorzugt eine piezoresistive, piezoelektrische und/oder eine kapazitive Dehnungsmessung.

4. Dehnungsmessstruktur (1) nach Anspruch 2,
**dadurch gekennzeichnet, dass**
die Messanordnung einen Spalt umfasst, welcher konfiguriert ist für eine kapazitive und/oder eine optische Dehnungsmessung.

5. Dehnungsmessstruktur (1) nach Anspruch 3,
**dadurch gekennzeichnet, dass**
die Federstruktur eine MEMS-Federstruktur (12), bevorzugt eine Halbleiter MEMS-Federstruktur ist, welche mindestens einen dotierten Bereich (17) in einer Seitenwand (19) aufweist, der einen Halbleiter-Dehnmessstreifen (21) umfasst.

6. Dehnungsmessstruktur (1) nach dem vorherigen Anspruch,
**dadurch gekennzeichnet, dass**
die MEMS-Federstruktur (12) mindestens vier Halbleiter-Dehnmessstreifen (21) umfasst, welche in mindestens einer Vollbrücke installiert vorliegen.

7. Dehnungsmessstruktur (1) nach einem oder mehreren der vorherigen Ansprüche,
**dadurch gekennzeichnet, dass**
ein Substrat der Messanordnung (5) und/oder des Trägers (3) ausgewählt ist aus einer Gruppe umfassend Halbleitermaterialien, bevorzugt umfassend Silizium, monokristallines Silizium, Polysilizium, Siliziumdioxid, Siliziumcarbid, Siliziumgermanium, Siliziumnitrid, Nitrid, Germanium, Kohlenstoff, Galliumarsenid, Galliumnitrid und/oder Indiumphosphid.

8. Dehnungsmessstruktur (1) nach einem oder mehreren der vorherigen Ansprüche,
**dadurch gekennzeichnet, dass**
der Träger (3) eine Rahmenstruktur (14) umfasst, wobei die Rahmenstruktur (14) bevorzugt mindestens drei Bereiche (7) umfasst, wobei zwischen jedem Bereich (7) und mindestens einem anderen Bereich (7) eine Messanordnung (5) vorliegt, wobei die Dehnungsmessstruktur (1) eine Dehnungsmessrosette (15) ist, welche konfiguriert ist für eine mehrachsige Dehnungsmessung.

9. Dehnungsmessstruktur (1) nach dem vorherigen Anspruch,
**dadurch gekennzeichnet, dass**
die Ausrichtung (23) der Messanordnungen (5) in der Rahmenstruktur (14) konfiguriert ist für einen Ausgleich anisotroper elastischer und/oder piezoresistiver Eigenschaften des Substrats der Messanordnung (5).

10. Dehnungsmessstruktur (1) nach einem oder mehreren der vorherigen Ansprüche,
**dadurch gekennzeichnet, dass**
der Träger (3) konfiguriert ist für eine mechanische und/oder thermische Aktivierung, wobei der Träger (3) bevorzugt mindestens ein elektrisches Heizelement zur thermischen Aktivierung umfasst.

11. Dehnungsmessstruktur (1) nach einem oder mehreren der vorherigen Ansprüche,
**dadurch gekennzeichnet, dass**
der Träger (3) konfiguriert ist für elektrisches und/oder chemisches Fügen, für eine elektrische Kontaktierung und/oder eine drahtlose Übertragung elektrischer Energie.

12. Herstellungsverfahren für eine Dehnungsmessstruktur (1) nach einem oder mehreren der vorherigen Ansprüche,
**dadurch gekennzeichnet, dass**
die Herstellung folgende Schritte umfasst:
- Ätzen eines Substrats für den Träger (3) und/oder die Messanordnung (5);
- Vorzugsweise Strukturierung des Trägers (3) und/oder der Messanordnung (5);
- Vorzugsweise Dotierung der Seitenwände der Messanordnung (5) für eine Integration mindestens eines Halbleiter-Dehnmessstreifens (21);
- Vorzugsweise elektrische Kontaktierung des Trägers (3), wobei ein Ätzen und/oder eine Strukturierung bevorzugt ausgewählt ist aus der Gruppe umfassend Trockenätzen, nasschemisches Ätzen und/oder Plasmaätzen, insbesondere reaktives lonenätzen, reaktives lonentiefenätzen (Bosch-Prozess); und/oder
das Dotieren bevorzugt ausgesucht ist aus der Gruppe umfassend Diffusion, Ionenimplantation und/oder Neutronen-Transmutationsdotierung.

13. System umfassend
a) eine Dehnungsmessstruktur (1) gemäß einem der vorherigen Ansprüche 1 - 11;
b) eine Steuereinrichtung
**dadurch gekennzeichnet, dass**
die Steuereinrichtung konfiguriert ist für ein Auslesen der Messanordnung (5) sowie bevorzugt für ein elektrisches und/oder chemisches Fügen und/oder einer Aktivierung der Dehnungsmessstruktur (1).

14. Verfahren zur Dehnungsmessung an einem Objekt
umfassend
- Bereitstellen einer Dehnungsmessstruktur (1) nach einem der vorherigen Ansprüche 1 - 11 oder eines Systems nach Anspruch 13;
- Fügen der Dehnungsmessstruktur (1) mit einem Objekt (11);
- Aktivieren der Dehnungsmessstruktur (1);
- Auslesen der mindestens einen Messanordnung (5).

15. Verwendung einer Dehnungsmessstruktur (1) nach einem oder mehreren der Ansprüche 1 - 11 oder eines Systems nach Anspruch 13 für eine Dehnungsmessung an einem Objekt (11).
